# EUROPEAN PATENT APPLICATION

(11) **EP 4 844 195 A1**
(43) Date of publication of application: **25.11.2026**
(21) Application number: 26179702.1
(22) Date of filing: 19.05.2026
(51) Int. Cl.: F01D 9/06, F01D 5/04, F01D 5/08, F01D 9/04, F02C 3/08, F02C 6/08, F04D 29/44

(54) **IMPELLER BACK-FACE IMPINGEMENT COOLING NOZZLE**

(30) Priority: 19.05.2025 US 202519211704
(71) Applicant: Pratt & Whitney Canada Corp., Longueuil, Québec J4G 1A1 (CA)
(72) Inventor: URAC, Tibor, Mississauga (CA); BROWN, Ryan Timothy, Caledon (CA)
(74) Representative: Dehns

(57) **Abstract**

A high-pressure compressor section (200) of a gas turbine engine (101) of an aircraft is provided. The high-pressure compressor section (200) includes an impeller (210) and a diffuser baffle (230). The impeller (210) includes an impeller front-face (211) along which high-temperature air flows and an impeller back-face (212) opposite the impeller front-face (211) and a diffuser baffle (230) proximate to the impeller back-face (212), whereby the impeller back-face (212) and the diffuser baffle (230) define an intervening cavity (240) therebetween. The diffuser baffle (230) is formed to generate a local cooling jet of cooling flow through the intervening cavity (240) and aimed toward the impeller back-face (212).

## Description

### BACKGROUND

The present disclosure relates to gas turbine engines and, in particular, to an impeller back-face impingement cooling nozzle of a gas turbine engine, such as a gas turbine engine of an aircraft.

In a gas turbine engine, fuel and compressed air are combusted in a combustor to produce a high-temperature and high-pressure fluid. This fluid enters a turbine and interacts with rows or stages of turbine blades and vanes. The interaction between the high-temperature and high-pressure fluid with the turbine blades and vanes causes the stages of turbine blades to rotate a shaft. The shaft rotation drives a compressor to compress the air for the combustor and, as noted above, can be used to drive operations of a generator to produce electricity and/or for propulsion.

### SUMMARY

According to an aspect of the disclosure, a high-pressure compressor section of a gas turbine engine of an aircraft is provided. The high-pressure compressor section includes an impeller and a diffuser baffle. The impeller includes an impeller front-face along which high-temperature air flows and an impeller back-face opposite the impeller front-face and a diffuser baffle proximate to the impeller back-face, whereby the impeller back-face and the diffuser baffle define an intervening cavity therebetween. The diffuser baffle is formed to generate a local cooling jet of cooling flow through the intervening cavity and aimed toward the impeller back-face.

In accordance with at least one or more additional and/or alternative embodiments, the diffuser baffle is formed to generate multiple local cooling jets.

In accordance with at least one or more additional and/or alternative embodiments, the diffuser baffle is formed to define an internal cavity and includes a second front-face, the second front-face facing the impeller back-face and being formed to define an opening, and the high-pressure compressor section further includes a tubular extension configured to generate the local cooling jet, the tubular extension being fluidly communicative with the internal cavity via the opening and extending from the second front-face, through a portion of the intervening cavity and toward the impeller back-face.

In accordance with at least one or more additional and/or alternative embodiments, the tubular extension extends at least 75% of a distance from the second front-face to the impeller back-face.

In accordance with at least one or more additional and/or alternative embodiments, the tubular extension has an airfoil-shaped cross-section.

In accordance with at least one or more additional and/or alternative embodiments, the tubular extension forms an angle α with the second front-face with 45°>α>135°.

In accordance with at least one or more additional and/or alternative embodiments, the diffuser baffle is formed to define an internal cavity and includes a second front-face facing the impeller back-face and being formed to define a scalloped opening to generate the local cooling jet, and the scalloped opening is fluidly communicative with the internal cavity and is scalloped from the second front-face, through a portion of the intervening cavity and toward the impeller back-face.

In accordance with at least one or more additional and/or alternative embodiments, the scalloped opening extends at least 75% of a distance from the second front-face to the impeller back-face.

In accordance with at least one or more additional and/or alternative embodiments, the scalloped opening has an airfoil-shaped cross-section.

In accordance with at least one or more additional and/or alternative embodiments, the scalloped opening forms an angle α with the second front-face with 45°>α>135°.

According to an aspect of the disclosure, a high-pressure compressor section of a gas turbine engine of an aircraft is provided. The high-pressure compressor section includes and impeller, a diffuser baffle and a pipe. The impeller includes an impeller front-face along which high-temperature air flows and an impeller back-face opposite the impeller front-face. The diffuser baffle is proximate to the impeller back-face, whereby the impeller back-face and the diffuser baffle define an intervening cavity therebetween. The pipe extends through the diffuser baffle and toward the impeller back-face to generate a local cooling jet of cooling flow through a portion of the intervening cavity and aimed toward the impeller back-face.

In accordance with at least one or more additional and/or alternative embodiments, the pipe is plural in number to generate plural local cooling jets.

In accordance with at least one or more additional and/or alternative embodiments, the pipe extends from a source of the cooling flow outboard and aft of the diffuser baffle.

In accordance with at least one or more additional and/or alternative embodiments, the diffuser baffle includes a second front-face facing the impeller back-face and the pipe extends at least 75% of a distance from the second front-face to the impeller back-face.

In accordance with at least one or more additional and/or alternative embodiments, the pipe has an airfoil-shaped cross-section.

In accordance with at least one or more additional and/or alternative embodiments, the diffuser baffle includes a second front-face facing the impeller back-face and the pipe forms an angle α with the second front-face with 45°>α>135°.

According to an aspect of the disclosure, a high-pressure compressor section of a gas turbine engine of an aircraft is provided. The high-pressure compressor section includes an impeller, a diffuser baffle and a pipe. The impeller includes an impeller front-face along which high-temperature air flows and an impeller back-face opposite the impeller front-face. The diffuser baffle is proximate to the impeller back-face, whereby the impeller back-face and the diffuser baffle define an intervening cavity therebetween. The diffuser baffle includes a second front-face facing the impeller back-face and being formed to define a scalloped opening to generate a local cooling jet of cooling flow through a portion of the intervening cavity and aimed toward the impeller back-face. The pipe extends through the diffuser baffle and into the scalloped opening to deliver the cooling flow to the scalloped opening.

In accordance with at least one or more additional and/or alternative embodiments, the scalloped opening and the pipe are plural in number to generate plural local cooling jets.

In accordance with at least one or more additional and/or alternative embodiments, the pipe extends from a source of the cooling flow outboard and aft of the diffuser baffle.

In accordance with at least one or more additional and/or alternative embodiments, the scalloped opening extends at least 75% of a distance from the second front-face to the impeller back-face.

In accordance with at least one or more additional and/or alternative embodiments, the scalloped opening has an airfoil-shaped cross-section.

In accordance with at least one or more additional and/or alternative embodiments, the scalloped opening forms an angle α with the second front-face with 45°>α>135°.

According to an aspect of the disclosure, a high-pressure compressor section of a gas turbine engine of an aircraft is provided. The high-pressure compressor section includes an impeller, a diffuser baffle and a pipe. The impeller includes an impeller front-face along which high-temperature air flows and an impeller back-face opposite the impeller front-face. The diffuser baffle is proximate to the impeller back-face, whereby the impeller back-face and the diffuser baffle define an intervening cavity therebetween. The diffuser baffle is formed to define an internal cavity and includes a second front-face facing the impeller back-face and being formed to define a scalloped opening to generate a local cooling jet of cooling flow through a portion of the intervening cavity and aimed toward the back-face. The pipe extends into the intervening cavity of the diffuser baffle to deliver the cooling flow to the scalloped opening via the internal cavity.

In accordance with at least one or more additional and/or alternative embodiments, at least the scalloped opening is plural in number to generate plural local cooling jets.

In accordance with at least one or more additional and/or alternative embodiments, the pipe extends from a source of the cooling flow outboard and aft of the diffuser baffle.

In accordance with at least one or more additional and/or alternative embodiments, the scalloped opening extends at least 75% of a distance from the second front-face to the impeller back-face.

In accordance with at least one or more additional and/or alternative embodiments, the scalloped opening has an airfoil-shaped cross-section.

In accordance with at least one or more additional and/or alternative embodiments, the scalloped opening forms an angle α with the second front-face with 45°>α>135°.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a cross-sectional view of a prior art turboshaft engine;
FIG. 2A is a side view of a high-pressure compressor section of a gas turbine engine of an aircraft with a tubular extension to generate a local cooling jet in accordance with embodiments;
FIG. 2B is an enlarged side view of the portion of the high-pressure compressor section enclosed by line 2B of FIG. 2A in accordance with embodiments;
FIG. 2C is a cross-sectional view taken along line 2C-2C of FIG. 2B in accordance with embodiments;
FIG. 3A is a side view of a high-pressure compressor section of a gas turbine engine of an aircraft with a scalloped opening to generate a local cooling jet in accordance with embodiments;
FIG. 3B is an enlarged side view of the portion of the high-pressure compressor section enclosed by line 3B of FIG. 3A in accordance with embodiments;
FIG. 3C is a cross-sectional view taken along line 3C-3C of FIG. 3B in accordance with embodiments;
FIG. 4A is a side view of a high-pressure compressor section of a gas turbine engine of an aircraft with a pipe to generate a local cooling jet in accordance with embodiments;
FIG. 4B is an enlarged side view of the portion of the high-pressure compressor section enclosed by line 4B of FIG. 4A in accordance with embodiments;
FIG. 4C is a cross-sectional view taken along line 4C-4C of FIG. 4B in accordance with embodiments;
FIG. 5A is a side view of a high-pressure compressor section of a gas turbine engine of an aircraft with a pipe leading to scalloped opening to generate a local cooling jet in accordance with embodiments;
FIG. 5B is an enlarged side view of the portion of the high-pressure compressor section enclosed by line 5B of FIG. 5A in accordance with embodiments;
FIG. 5C is a cross-sectional view taken along line 5C-5C of FIG. 3B in accordance with embodiments; and
FIG. 6 is a side view of a high-pressure compressor section of a gas turbine engine of an aircraft with a pipe to deliver coolant to a scalloped opening to generate a local cooling jet via an internal cavity of a diffuser baffle in accordance with embodiments.

### DETAILED DESCRIPTION

The following disclosure is applicable to any type of gas turbine engine, including, but not limited to, turbofans, turboshafts, turboprops, turbojets, electrical drives, hybrid drives, etc. The gas turbine engine described below is provided by way of example, and should not be interpreted as limiting the scope of the application or the claims in any way.

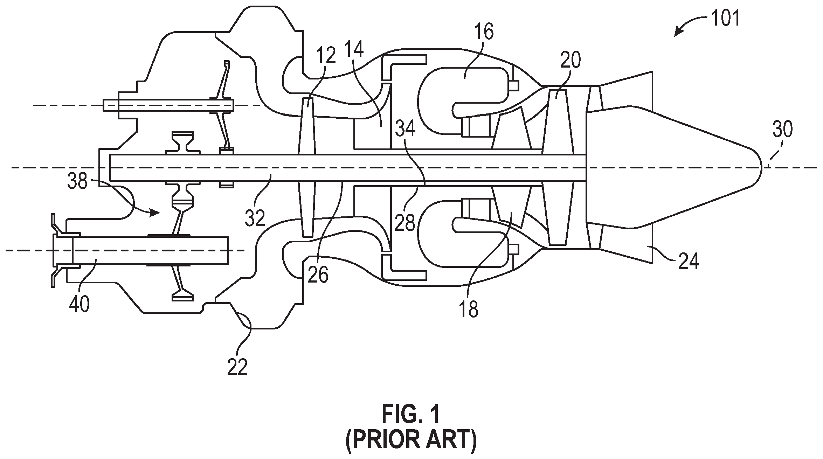

With reference to FIG. 1, a turboshaft engine 101 is provided and configured as a gas turbine engine. In particular, the turboshaft engine 101 is a generally conventional turboshaft engine generally including, in serial flow communication, a low pressure (LP) compressor section 12 and a high pressure (HP) compressor section 14 for pressurizing air, a combustor 16 in which the compressed air is mixed with fuel and ignited for generating an annular stream of hot combustion gases, a high pressure turbine section 18 for extracting energy from the combustion gases and driving the high pressure compressor section 14 and a lower pressure turbine section 20 for further extracting energy from the combustion gases and driving at least the low pressure compressor section 12.

The low pressure compressor section 12 may independently rotate from the high pressure compressor section 14. The low pressure compressor section 12 may include one or more compression stages and the high pressure compressor section 14 may include one or more compression stages. A compressor stage may include a compressor rotor, or a combination of the compressor rotor and a compressor stator assembly. In a multistage compressor configuration, the compressor stator assemblies may direct the air from one compressor rotor to the next.

The turboshaft engine 101 has multiple, i.e. two or more, spools which may perform the compression to pressurize the air received through an air inlet 22, and which extract energy from the combustion gases before they exit via an exhaust outlet 24. For example, the turboshaft engine 101 can include a low pressure spool 26 and a high pressure spool 28 mounted for rotation about an engine axis 30. The low pressure and high pressure spools 26, 28 are independently rotatable relative to each other about the axis 30. The term "spool" is herein intended to broadly refer to drivingly connected turbine and compressor rotors.

The low pressure spool 26 includes a low pressure shaft 32 interconnecting the low pressure turbine section 20 with the low pressure compressor section 12 to drive rotors of the low pressure compressor section 12. In other words, the low pressure compressor section 12 may include at least one low pressure compressor rotor directly drivingly engaged to the low pressure shaft 32 and the low pressure turbine section 20 may include at least one low pressure turbine rotor directly drivingly engaged to the low pressure shaft 32 so as to rotate the low pressure compressor section 12 at a same speed as the low pressure turbine section 20. The high pressure spool 28 includes a high pressure shaft 34 interconnecting the high pressure turbine section 18 with the high pressure compressor section 14 to drive rotors of the high pressure compressor section 14. In other words, the high pressure compressor section 14 may include at least one high pressure compressor rotor directly drivingly engaged to the high pressure shaft 34 and the high pressure turbine section 18 may include at least one high pressure turbine rotor directly drivingly engaged to the high pressure shaft 34 so as to rotate the high pressure compressor section 14 at a same speed as the high pressure turbine section 18. In some embodiments, the high pressure shaft 34 may be hollow and the low pressure shaft 32 extends therethrough. The two shafts 32, 34 are free to rotate independently from one another.

The turboshaft engine 101 may further include a transmission 38 driven by the low pressure shaft 32 and driving a rotatable output shaft 40. The transmission 38 may vary a ratio between rotational speeds of the low pressure shaft 32 and the output shaft 40.

Within the high-pressure compressor section 14, high-temperature and high-pressure air flows along a gap formed between an impeller and an impeller shroud and between the impeller and a back-face baffle (can be called either a back-face baffle or a diffuser baffle, since it is normally attached to the diffuser, but functionally it is an impeller back-face baffle) and is used to provide pressurized air to an engine secondary air system (SAS). This high-temperature and high-pressure air tends to heat the impeller as if flows past the impeller back-face, which can reduce material capabilities, thus necessitating an introduction of cooling air flow to help reduce impeller metal temperatures..

One way of cooling the impeller has been to use impeller back face cooling in which cooling flows are directed along the back-face of the impeller. These cooling flows can be introduced near the outboard tip of the back-face and travel inwardly. This flow pattern causes the cooling flows to draw heat from the outboard tip of the impeller, which heats the cooling flows and decreases the cooling effect where it is needed further radially inward on the impeller where the stresses are higher. In addition, the cooling flows tend to mix with swirling air flows that are present between the back-face and the diffuser baffle adjacent to the back-face. The mixing of the cooling flows and the swirling air flows also causes the cooling flows to heat and leads to decreased cooling effect. Another method can be to introduce the cooling flow further radially inward on the rear baffle, closer to the higher stress area on the back-face of the impeller, but similar issues of the cooling flow mixing with the high temperature back face SAS flow occurs thus reducing the cooling flow effectiveness to be able to reduce the impeller metal temperatures.

In one other solution to the problem of directing cooling flows along the back-face of the impeller, a gap between the baffle and the impeller back-face can be reduced at the radial location where the impeller back-face needs to be cooled. While this can bring the cooling flows closer to the impeller back-face and may reduce cooling flow heating and mixing with the swirling air flows, reducing the gap also results in increased windage and potentially reduced SAS flow. The increased windage can increase the temperature of the swirling air flows.

A need therefore exists for a gas turbine engine, such as a gas turbine engine of an aircraft, in which cooling air flows are directed toward the back-face of the impeller within the high-pressure compressor section 14 without heating the cooling air flows, without causing mixing between the cooling air flows and without increasing windage and the temperature of swirling air flows.

Thus, as will be described below, an impingement cooling nozzle is provided to direct cooling flows toward an impeller back-face of a high-pressure compressor section of a gas turbine engine, such as a gas turbine engine of an aircraft, with minimal change in windage churn heat generation. The impingement cooling nozzle can include or be provided as a small extension from the diffuser baffle adjacent to the back-face and/or as holes, which can be designed as scalloped holes, to create local cooling jets. The swirling air flows can move around and pass between the impingement cooling nozzle and/or the local cooling jets without increasing windage and the temperature of swirling air flows. The local cooling jets can be adjusted to aim cooling flows directly toward high-stress locations of the back-face whereby the cooling flows would have the largest impact of reducing metal temperatures which in turn improves a lifespan of the impeller.

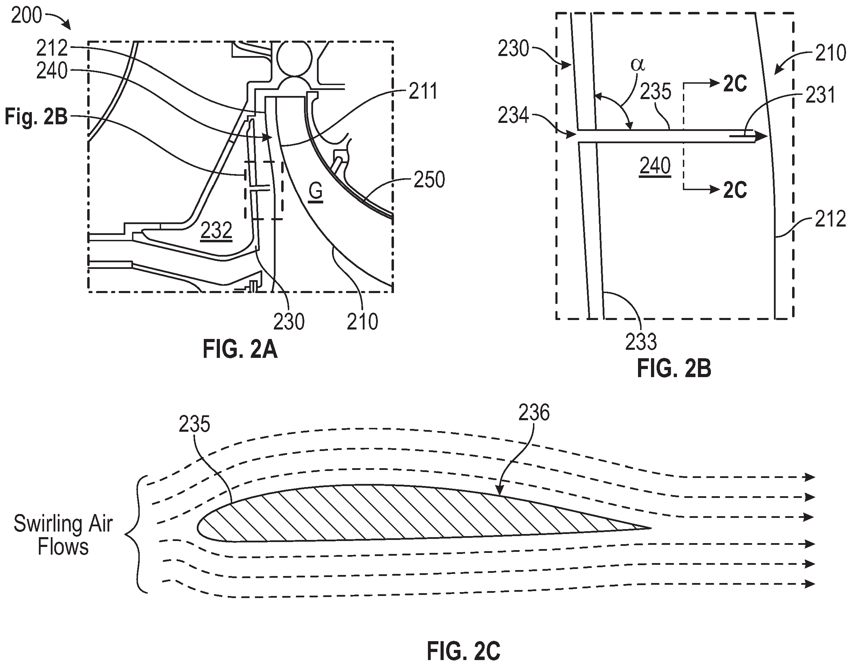

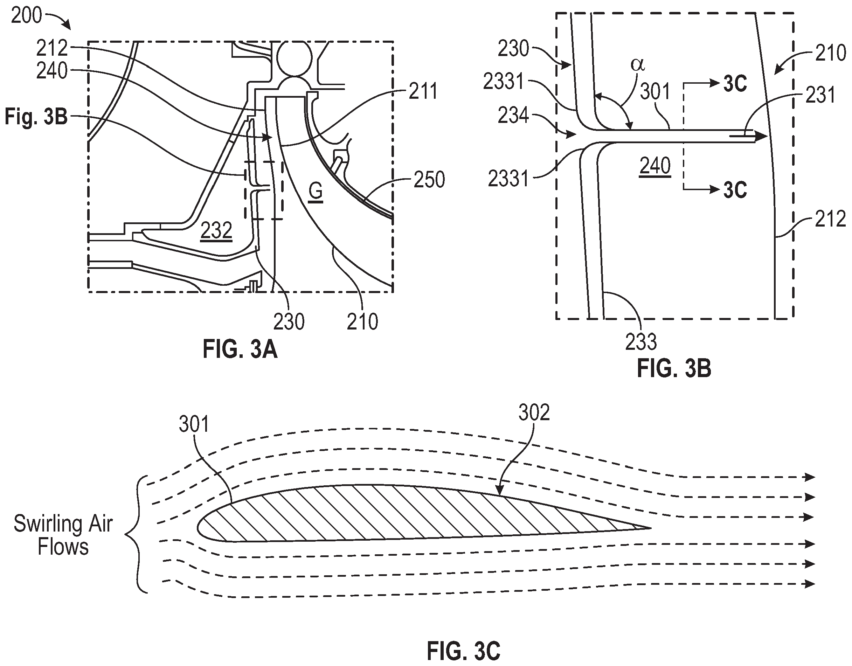

With reference to FIGS. 2A, 2B and 2C and to FIGS. 3A, 3B and 3C, a high-pressure compressor section 200 of a gas turbine engine of an aircraft, such as the high-pressure compressor section 14 of FIG. 1, is provided. The high-pressure compressor section 200 includes an impeller 210, a diffuser baffle 230 and an impeller shroud 250. The impeller 210 includes an impeller front-face 211 and an impeller back-face 212. The impeller shroud 250 faces the impeller front-face 211 at a distance to define a gap G. High-temperature air flows can be directed to flow through the gap G and along the impeller front-face 211. The impeller back-face 212 is disposed opposite the impeller front-face 211. The diffuser baffle 230 is proximate to the impeller back-face 211, whereby the impeller back-face 211 and the diffuser baffle 230 define an intervening cavity 240 therebetween. The diffuser baffle 230 is formed to generate one or multiple local cooling jets 231 of cooling flow through the intervening cavity 240 and aimed toward the impeller back-face 212 (although the diffuser baffle 230 is formed to generate one or multiple local cooling jets 231, the following description will generally relate to a case of a single local cooling jet 231; this is being done for purposes of clarity and brevity and should not be interpreted as limiting the disclosure or the following claims in any manner).

The cooling flow of the local cooling jet 231 serves to generate an impinging cooling flow onto the impeller back-face 212. This impinging cooling flow cools the impeller back-face 212 and the impeller 210 as a whole and thus counteracts heating of the impeller 210 by the high-temperature air flows both on the front-face 211 and on the back-face 212. In some cases, the local cooling jet 231 can be aimed toward a high-stress location of the impeller back-face 212 to maximize positive effects of cooling.

The diffuser baffle 230 can be formed to define an internal cavity 232 and can include a second front-face 233. The second front-face 233 faces the impeller back-face 212 across the intervening cavity 240 and is formed to define an opening 234. In these or other cases, the high-pressure compressor section 200 can further include a tubular extension 235. The tubular extension 235 is configured to generate the local cooling jet 231. The tubular extension 235 is fluidly communicative with the internal cavity 232 via the opening 234 and extends from the second front-face 233, through a portion of the intervening cavity 240 and toward the impeller back-face 212. The tubular extension 235 can extend at least 75% of a distance across the intervening cavity 240 from the second front-face 233 to the impeller back-face 212. As shown in FIG. 2C, the tubular extension 235 can have an airfoil-shaped cross-section 236, such that the tubular extension 235 minimally interacts with swirling air flows in the intervening cavity 240. The dimensions, size and shape of the airfoil-shaped cross-section 236 (i.e., the angle of attack, the camber line, etc.) can be variable based on multiple factors including, but not limited to, characteristics of the swirling air flows, a position of the tubular extension 235 in radial, circumferential and axial dimensions, a number of the local cooling jet(s) 231 and a desired degree of cooling. The tubular extension 235 can form an angle α with the second front-face 233 with 45°>α>135° as an approximation, though it is to be understood that the range of a can be greater or smaller with varying end points (i.e., 45° +/- 10° and 135° +/- 10°).

As shown in FIGS. 3A-3C, the diffuser baffle 230 can be formed to define the internal cavity 232 and can include the second front-face 233. The second front-face 233 faces the impeller back-face 212 across the intervening cavity 240 and is formed to define a scalloped opening 301 to generate the local cooling jet 231. The scalloped opening 301 is fluidly communicative with the internal cavity 232 and is scalloped from the second front-face 233, through a portion of the intervening cavity 240 and toward the impeller back-face 212. That is, the scalloped opening 301 can be formed by forwardly curved portions 2331 of the second front-face 233 that curve toward the impeller back-face 212 and that form an aperture that can be tapered (i.e., slightly tapered) inwardly with increasing distance from the second front-face 233. The scalloped opening 301 can extend at least 75% of a distance across the intervening cavity 240 from the second front-face 233 to the impeller back-face 212. As shown in FIG. 3C in particular, the scalloped opening 301 can have an airfoil-shaped cross-section 302, such that the scalloped opening 301 minimally interacts with swirling air flows in the intervening cavity 240. The dimensions, size and shape of the airfoil-shaped cross-section 302 (i.e., the angle of attack, the camber line, etc.) can be variable based on multiple factors including, but not limited to, characteristics of the swirling air flows, a position of the scalloped opening(s) 301 in radial, circumferential and axial dimensions, a number of the local cooling jet(s) 231 and a desired degree of cooling. The scalloped opening 301 can form an angle α with the second front-face 233 with 45°>α>135° as an approximation, though it is to be understood that the range of a can be greater or smaller with varying end points (i.e., 45° +/- 10° and 135° +/- 10°).

The following descriptions will relate to one or more additional and/or alternative embodiments of the high-pressure compressor section 200 and descriptions of common components that have already been described in detail are unnecessary and are omitted.

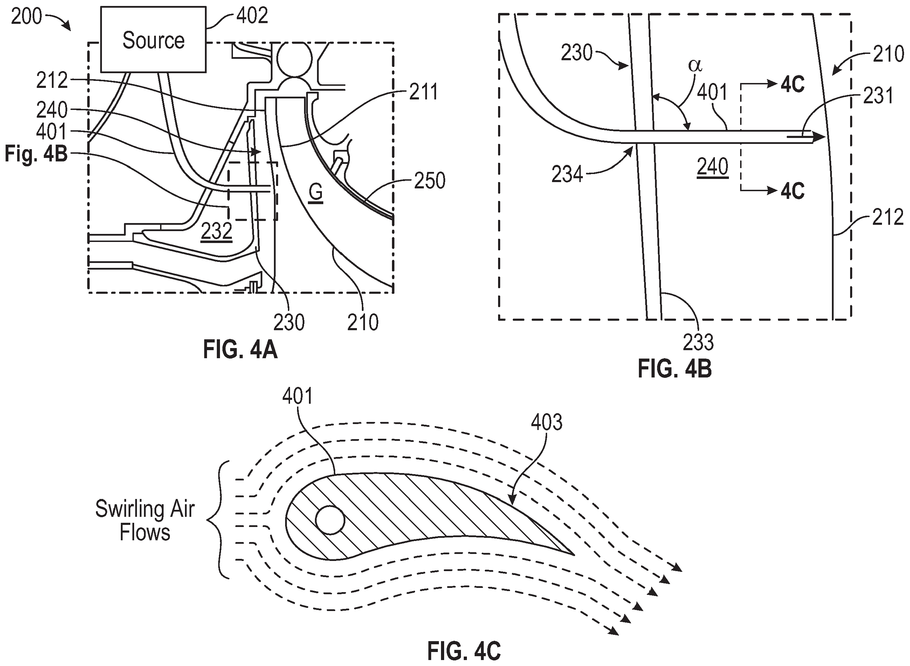

With reference to FIGS. 4A, 4B and 4C, the high-pressure compressor section 200 includes the impeller 210, the diffuser baffle 230, the impeller shroud 250 and one or multiple pipes 401. Each of the one or multiple pipes 401 extends from a source (i.e., a heat exchanger) 402 of the cooling flow, which is disposed outboard and aft of the diffuser baffle 230, through the diffuser baffle 230 and toward the impeller back-face 212. Each of the one or multiple pipes 401 is configured to generate the local cooling jet 231 of the cooling flow through a portion of the intervening cavity 240 and aimed toward the impeller back-face 212 (although the high-pressure compressor section 200 can include one or multiple pipes 401, the following description will generally relate to a case of a single pipe 401; this is being done for purposes of clarity and brevity and should not be interpreted as limiting the disclosure or the following claims in any manner).

The pipe 401 can extend at least 75% of a distance from the second front-face 233 to the impeller back-face 212. As shown in FIG. 4C, the pipe 401 can have an airfoil-shaped cross-section 403, such that the pipe 401 minimally interacts with swirling air flows in the intervening cavity 240. The dimensions, size and shape of the airfoil-shaped cross-section 402 (i.e., the angle of attack, the camber line, etc.) can be variable based on multiple factors including, but not limited to, characteristics of the swirling air flows, a position of the pipe(s) 401 in radial, circumferential and axial dimensions, a number of the local cooling jet(s) 231 and a desired degree of cooling. The pipe 401 can form an angle α with the second front-face 233 with 45°>α>135° as an approximation, though it is to be understood that the range of a can be greater or smaller with varying end points (i.e., 45° +/- 10° and 135° +/- 10°).

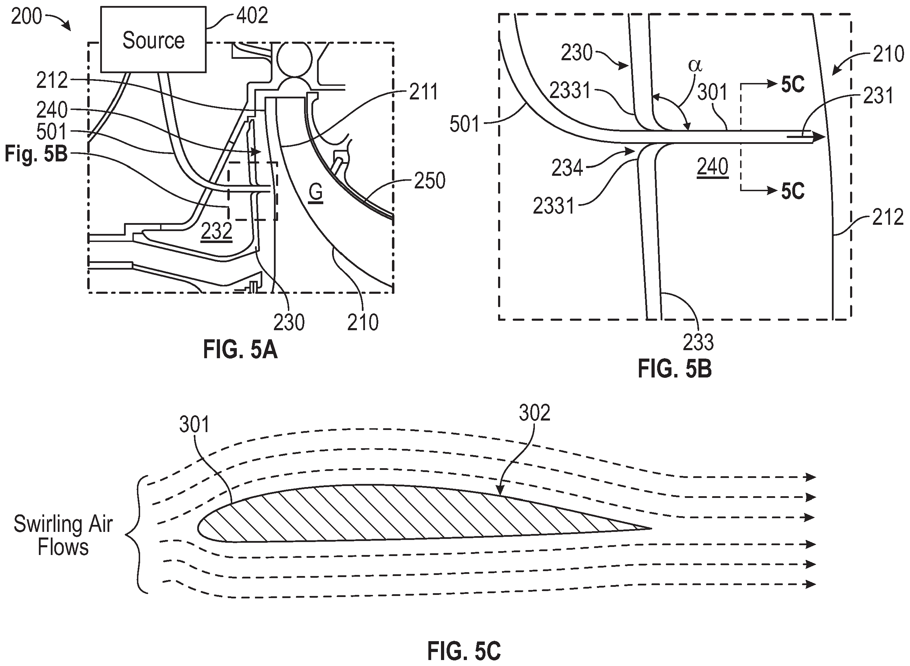

With reference to FIGS. 5A, 5B and 5C, the high-pressure compressor section 200 includes the impeller 210, the diffuser baffle 230, the impeller shroud 250 and one or multiple pipes 501 (although the high-pressure compressor section 200 can include one or multiple pipes 501, the following description will generally relate to a case of a single pipe 501; this is being done for purposes of clarity and brevity and should not be interpreted as limiting the disclosure or the following claims in any manner). The diffuser baffle 230 can be formed to define the internal cavity 232 and can include the second front-face 233. The second front-face 233 faces the impeller back-face 212 across the intervening cavity 240 and is formed to define the scalloped opening 301 to generate the local cooling jet 231 through the portion of the intervening cavity 240 and aimed toward the impeller back-face 212. The pipe 501 extends from the source 402 of the cooling flow, which is disposed outboard and aft of the diffuser baffle 230, through the diffuser baffle 230 and into the scalloped opening 301 to deliver the cooling flow to the scalloped opening 301. An interface between the pipe 501 and the scalloped opening 301 can be tangential, with the pipe 501 inside the scalloped opening 301 and/or sealed.

The scalloped opening 301 can extend at least 75% of a distance from the second front-face 233 to the impeller back-face 212. As shown in FIG. 5B, the scalloped opening 301 can have an airfoil-shaped cross-section 302, such that the scalloped opening 301 minimally interacts with swirling air flows in the intervening cavity 240. The dimensions, size and shape of the airfoil-shaped cross-section 302 (i.e., the angle of attack, the camber line, etc.) can be variable based on multiple factors including, but not limited to, characteristics of the swirling air flows, a position of the scalloped opening(s) 301 in radial, circumferential and axial dimensions, a number of the local cooling jet(s) 231 and a desired degree of cooling. The scalloped opening 301 can form an angle α with the second front-face 233 with 45°>α>135° as an approximation, though it is to be understood that the range of a can be greater or smaller with varying end points (i.e., 45° +/- 10° and 135° +/- 10°).

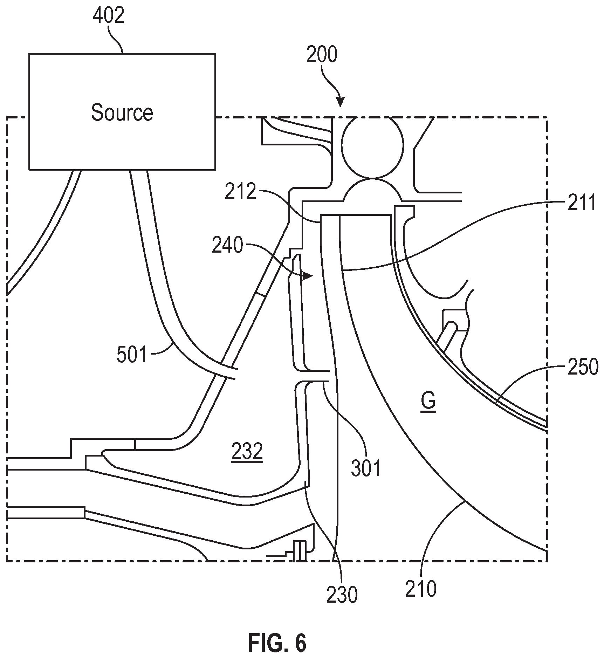

With reference to FIG. 6, it is noted that the embodiments of FIG. 6 are similar to the embodiments of FIGS. 5A, 5B and 5C with the difference being that the pipe 501 extends into the internal cavity 232 to deliver the cooling flow to the scalloped opening 301 via the internal cavity 232.

Technical effects and benefits of the present disclosure are the provision of an impingement cooling nozzle to direct cooling flows toward an impeller back-face of a high-pressure compressor section of a gas turbine engine, such as a gas turbine engine of an aircraft, with minimal change in windage churn heat generation. This creates local cooling jets. Swirling air flows can move around and pass between the impingement cooling nozzle and/or the local cooling jets without increasing windage and the temperature of swirling air flows. The local cooling jets can be adjusted to aim cooling flows directly toward high-stress locations of the back-face whereby the cooling flows would have the largest impact of improving a lifespan of the impeller.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A high-pressure compressor section of a gas turbine engine of an aircraft, the high-pressure compressor section comprising:
an impeller comprising an impeller front-face along which high-temperature air flows and an impeller back-face opposite the impeller front-face; and
a diffuser baffle proximate to the impeller back-face, whereby the impeller back-face and the diffuser baffle define an intervening cavity therebetween,
the diffuser baffle being formed to generate a local cooling jet of cooling flow through the intervening cavity and aimed toward the impeller back-face.

2. The high-pressure compressor section according to claim 1, wherein the diffuser baffle is formed to generate multiple local cooling jets.

3. The high-pressure compressor section according to claim 1 or 2, wherein:
the diffuser baffle is formed to define an internal cavity and comprises a second front-face, the second front-face facing the impeller back-face and being formed to define an opening, and
the high-pressure compressor section further comprises a tubular extension configured to generate the local cooling jet, the tubular extension being fluidly communicative with the internal cavity via the opening and extending from the second front-face, through a portion of the intervening cavity and toward the impeller back-face.

4. The high-pressure compressor section according to claim 3, wherein the tubular extension extends at least 75% of a distance from the second front-face to the impeller back-face.

5. The high-pressure compressor section according to claim 3 or 4, wherein the tubular extension has an airfoil-shaped cross-section.

6. The high-pressure compressor section according to claim 3, 4 or 5, wherein the tubular extension forms an angle α with the second front-face with 45°>α>135°.

7. The high-pressure compressor section according to claim 1, wherein:
the diffuser baffle is formed to define an internal cavity and comprises a second front-face facing the impeller back-face and being formed to define a scalloped opening to generate the local cooling jet, and
the scalloped opening is fluidly communicative with the internal cavity and is scalloped from the second front-face, through a portion of the intervening cavity and toward the impeller back-face.

8. The high-pressure compressor section according to claim 7, wherein the scalloped opening extends at least 75% of a distance from the second front-face to the impeller back-face.

9. The high-pressure compressor section according to claim 7 or 8, wherein the scalloped opening has an airfoil-shaped cross-section.

10. The high-pressure compressor section according to claim 7, 8 or 9, wherein the scalloped opening forms an angle α with the second front-face with 45°>α>135°.

11. A high-pressure compressor section of a gas turbine engine of an aircraft, the high-pressure compressor section comprising:
an impeller comprising an impeller front-face along which high-temperature air flows and an impeller back-face opposite the impeller front-face;
a diffuser baffle proximate to the impeller back-face, whereby the impeller back-face and the diffuser baffle define an intervening cavity therebetween; and
a pipe that extends through the diffuser baffle and toward the impeller back-face to generate a local cooling jet of cooling flow through a portion of the intervening cavity
and aimed toward the impeller back-face.

12. The high-pressure compressor section according to claim 11, wherein the pipe is plural in number to generate plural local cooling jets; and/or wherein the pipe extends from a source of the cooling flow outboard and aft of the diffuser baffle.

13. The high-pressure compressor section according to claim 11 or 12, wherein:
the diffuser baffle comprises a second front-face facing the impeller back-face, and the pipe extends at least 75% of a distance from the second front-face to the impeller back-face; and/or
the pipe has an airfoil-shaped cross-section; and/or
the diffuser baffle comprises a second front-face facing the impeller back-face, and the pipe forms an angle α with the second front-face with 45°>α>135°.

14. A high-pressure compressor section of a gas turbine engine of an aircraft, the high-pressure compressor section comprising:
an impeller comprising an impeller front-face along which high-temperature air flows and an impeller back-face opposite the impeller front-face;
a diffuser baffle proximate to the impeller back-face, whereby the impeller back-face and the diffuser baffle define an intervening cavity therebetween, the diffuser baffle comprising a second front-face facing the impeller back-face and being formed to define a scalloped opening to generate a local cooling jet of cooling flow through a portion of the intervening cavity and aimed toward the impeller back-face; and
a pipe that extends through the diffuser baffle and into the scalloped opening to deliver the cooling flow to the scalloped opening.

15. The high-pressure compressor section according to claim 14, wherein the scalloped opening and the pipe are plural in number to generate plural local cooling jets; and/or
wherein the scalloped opening extends at least 75% of a distance from the second front-face to the impeller back-face, and the scalloped opening forms an angle α with the second front-face with 45°>α>135°; and/or
wherein the scalloped opening has an airfoil-shaped cross-section.
